# EUROPEAN PATENT APPLICATION

(11) **EP 1 892 277 A2**
(43) Date of publication of application: **27.02.2008**
(21) Application number: 07114323.4
(22) Date of filing: 14.08.2007
(51) Int. Cl.: C09J 151/04

(54) **Butyl adhesive containing maleic anhydride and optional nanoclay**

(30) Priority: 24.08.2006 US 839866 P
(71) Applicant: Lanxess Inc., Sarnia, Ontario N7T 7M2 (CA)
(72) Inventor: Akhtar, Osman, Sarnia, Ontario N7T 5X7 (CA); Krista, Rayner, Strathroy, Ontario N7G 3X1 (CA)
(74) Representative: Thot, Norman Benjamin

(57) **Abstract**

An adhesive polymer comprising a maleic anhydride grafted butyl rubber and a polymer compound made from the adhesive polymer further comprising a functionalized siliceous nanoclay. The adhesive polymer and polymer compound exhibit greatly improved adhesion to certain substrate surfaces. Examples of substrate materials include stainless steel, glass, mylar or Teflon®. The greatest adhesion was observed in polymer compounds comprising maleic anhydride grafted butyl rubber produced according to a solution process and from 5 to 15 phr of a montmorillonite nanoclay. The adhesion is improved with increasing levels of nanoclay content in the compound up to a limit where filler-filler interactions occur.

## Description

### Field of the Invention

The invention relates to polymers, polymer compounds and composite articles made therefrom comprising maleic anhydride grafted butyl polymers having surprising adhesive properties. More particularly, the invention relates to maleic anhydride grafted butyl polymers prepared in solution and polymer compounds made therefrom containing montmorillonite nanoclay, both of which exhibit surprising adhesive strength.

### Background

Poly(isobutylene-co-isoprene), or IIR, is a synthetic elastomer commonly known as butyl rubber which has been prepared since the 1940's through the random cationic copolymerization of isobutylene with small amounts of isoprene (1-2 mole %) . As a result of its molecular structure, IIR possesses superior air impermeability, a high loss modulus, oxidative stability and extended fatigue resistance.

Butyl rubber is understood to be a copolymer of an isoolefin and one or more, preferably conjugated, multiolefins as comonomers. Commercial butyl comprises a major portion of isoolefin and a minor amount, not more than 2.5 mol %, of a conjugated multiolefin. Butyl rubber or butyl polymer is generally prepared in a slurry process using methyl chloride as a vehicle and a Friedel-Crafts catalyst as part of the polymerization initiator. This process is further described in U.S. Patent No. 2,356,128 and Ullmanns Encyclopedia of Industrial Chemistry, volume A 23, 1993, pages 288-295.

Existing butyl rubber grades are used in a variety of applications where the inherent low gas permeation rate is of great importance. The adhesion of butyl rubber to solid surfaces is an important physical property that leads to the formation of composite materials. For example, in multi-pane gas filled glass window seals, the low permeation of butyl elastomers allows the retention of special gases of low thermal conductivity for prolonged periods of time. As the ever-increasing demand for improved energy efficiency drives improvements in window design, better adhesion properties in window seals are required. However, existing butyl rubber polymers exhibit only moderate adhesion to glass surfaces and as a result have deficiencies when used in glass-polymer composite applications. The same is true of metal-polymer and plastic-polymer composite applications.

The publication Bayer - Manual for the Rubber industry 2^{nd} Edition at Page 512 table D10-1 and at page 514 table D10-2 as well as page 515 table D10-4 highlights the poor adhesion of butyl elastomers to steel, rayon, polyamide and polyester. In thermoset rubber compounds the poor adhesion of butyl rubber is partially overcome with a laborious process of coating the fabric / steel with a resorcinol, formaldehyde, latex, isocyanate RFL bonding system. In addition a resorcinol, formaldehyde, silica RFS bonding system is incorporated into the thermoset rubber compound. Even with these efforts an adhesion rating of 3, 2, and 0 (0-5 scale, with 5 being excellent) is all that can be expected for rayon, polyamide and regular finish polyester, respectively.

There is therefore a need for improving adhesion between butyl rubber and glass, metal and/or plastic surfaces.

In the past, butyl rubber polymers such as Bayer® BB 2030 have exhibited adhesion values of less than 15 psi for stainless steel, less than 10 psi for glass and less than 5 psi for mylar. Improvements in these adhesion values are constantly being sought. To date no attempts have been made to characterize adhesion between maleic anhydride grafted butyl rubber polymers and glass, metal or plastic surfaces.

Maleic anhydride grafted polymers are typically prepared on a mill from dried butyl rubber feedstocks. The grafting reaction normally takes place at temperatures in excess of 120 °C in the presence of thermally activated peroxide initiators. This process normally results in a butyl rubber having a much lower molecular weight than the starting material (typically less than half), but a significant amount of cross-linking and gel formation can occur due to the temperatures employed. Cross-linking and gel formation are detrimental in further compounding operations, particularly in the addition of inorganic fillers. In the formation of filled compounds, it would therefore be desirable to produce the maleic anhydride grafted butyl rubber using an alternative process that generates a low molecular weight material, but with a lower gel content than is conventionally known. It would also be desirable to produce a rubber having a molecular weight greater than conventional maleated butyl rubbers in order to provide a higher viscosity for caulking applications.

Siliceous clays are a particular example of an inorganic mineral filler. Each silicate layer is approximately 1 nm in thickness and consists of a central octahedral sheet of alumina fused between two external tetrahedral silica sheets. The gallery spacing between these layers is about 1 nm and occupied by hydrated cations. The environment of the galleries is hydrophilic and thus prevents penetration of the hydrophobic elastomer chains. Siliceous clays normally comprise complexes of an inorganic cation (for example, sodium) with the silicates. Replacement of the inorganic cation with a quaternary onium ion, for example a phosphonium or ammonium ion, forms an onium ion substituted siliceous clay. The surfactant nature of the onium ion allows the hydrophobic elastomer to interact with the hydrophilic galleries, making polymer-clay nanocomposites possible.

Polymer-clay nanocomposites typically exhibit increased tensile strength and decreased elongation when compared with conventional silica filled rubber compounds due to a platelet-type dispersion of the clay within the rubber matrix. These modified physical properties are only obtained when nano-sized clays are uniformly dispersed throughout the rubber matrix, without appreciable agglomeration. Depending on the degree of dispersement, the polymer-clay nanocomposites can be classified as either intercalated or exfoliated nanocomposites. In intercalated nanocomposites, the clay particles are dispersed in an ordered lamellar structure with large gallery height as a result of the insertion of polymer chains into the gallery. In exfoliated nanocomposites, each silicate layer is delaminated and dispersed in a continuous polymer.

Although the preparation of nanocomposites comprising maleic anhydride grafted butyl rubber and siliceous nanoclays is described in Kato, M.; Tsukigase, A.; Tanaka, H.; Usuki, A.; Inai, I. "Preparation and Properties of Isobutylene-Isoprene Rubber-Clay Nanocomposites" Journal of Polymer Science; Part A: Polymer Chemistry, v. 44, pp. 1182-1188 (2006), no results are reported for the adhesion of these nanocomposites to various substrates. The physical property modification obtained through the intercalation or exfoliation of siliceous nanoclays is generally considered to have a negative effect on adhesion; as a result, few such nanocomposite compounds have been tested. Polymer compounds comprising nanoclays are therefore not normally used in adhesive applications.

The need therefore still exists for a butyl polymer having improved surface adhesion characteristics and for composite articles made therefrom.

### Summary of the Invention

According to the present invention, there is provided an adhesive polymer comprising maleic anhydride grafted butyl rubber produced by: providing a solution of a brominated butyl rubber in a non-polar hydrocarbon solvent; adding to the solution at least 1 phr of maleic anhydride, an anti-oxidant and a catalyst of the formula, 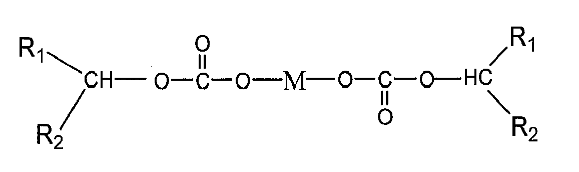 wherein,
M is a divalent metal,
R₁ is a C₂ to C₂₀ alkyl hydrocarbon,
R₂ is a C₂ to C₂₀ alkyl hydrocarbon; and,
reacting the solution at a pressure of at least 100 psi and a temperature of less than or equal to 120 °C to form the maleic anhydride grafted butyl rubber.

According to another aspect of the present invention, there is provided a polymer compound comprising: a butyl polymer comprising repeating units derived from an isobutene monomer and less than 2.5 mol% of repeating units derived from an isoprene monomer, the butyl polymer having at least 0.5 mol% of maleic anhydride units grafted thereto; from 5 to 15 phr of a montmorillonite nanoclay; and, the polymer compound having an adhesive strength when adhered to a substrate surface at least 15% greater than that of a butyl polymer as previously specified adhered to the same substrate surface.

The present invention is advantageous in applications where increased adhesion between rubber and substrate surfaces is required, such as in steel belting of tires, vibration isolation in windows, improved sail materials for sailing vessels, and the like. The maleic anhydride grafted polymer and nanoclay containing compound of the present invention is particularly advantageous in caulking applications, especially in the sealing of windows.

Further features of the invention will be described in the following detailed description.

### Detailed Description of Preferred Embodiments

Butyl polymers are generally derived from at least one isoolefin monomer, at least one multiolefin monomer and optionally further copolymerizable monomers.

The butyl polymer is not limited to a special isoolefin. However, isoolefins within the range of from 4 to 16 carbon atoms, preferably 4-7 carbon atoms, such as isobutene, 2-methyl-1-butene, 3-methyl-1-butene, 2-methyl-2-butene, 4-methyl-1-pentene and mixtures thereof are preferred. More preferred is isobutene.

The butyl polymer is not limited to a special multiolefin. Every multiolefin copolymerizable with the isoolefin known by the skilled in the art can be used. However, multiolefins with in the range of from 4-14 carbon atoms, such as isoprene, butadiene, 2-methylbutadiene, 2,4-dimethylbutadiene, piperyline, 3-methyl-1,3-pentadiene, 2,4-hexadiene, 2-neopentylbutadiene, 2-methly-1,5-hexadiene, 2,5-dimethly-2,4-hexadiene, 2-methyl-1,4-pentadiene, 2-methyl-1,6-heptadiene, cyclopenta-diene, methylcyclopentadiene, cyclohexadiene, 1-vinyl-cyclohexadiene and mixtures thereof, preferably conjugated dienes, are used. Isoprene is more preferably used.

Preferably, the butyl polymer contains in the range of from 97% to about 99.5% by weight of at least one isoolefin monomer and in the range of from 3.0% to 0.5% by weight of at least one multiolefin monomer. A preferred butyl polymer contains at least 0.5 mol%, preferably at least 0.75 mol%, more preferably at least 1.0 mol%, yet more preferably at least 1.5 mol%, still more preferably at least 2.0 mol%, even more preferably at least 2.5 mol% of repeating units derived from at least one multiolefin monomer. More preferably, the butyl polymer contains in the range of from 97.5% to 99% by weight of at least one isoolefin monomer and in the range of from 2.5% to 1% by weight of at least one multiolefin monomer. A preferred isoolefin is isobutene and a preferred multiolefin is isoprene.

The butyl polymer is then grafted with maleic anhydride. The maleic anhydride content of the grafted polymer is at least 0.5 mol%, preferably at least 0.75 mol%, more preferably at least 1.0 moi%, yet more preferably at least 1.25 mol%, even more preferably at least 1.5 mol%, still more preferably at least 1.75 mol%, yet even more preferably at least 2.0 mol%, yet still more preferably at least 2.25 mol%, most preferably at least 2.5 mol%.

The addition of maleic anhydride to the butyl polymer results in a surprising improvement in adhesive strength, particularly to surfaces having polar functional groups. The maleic anhydride grafted butyl polymer in the composite article exhibits an improvement in adhesive strength to a given substrate surface of at least 15% as compared with the adhesion of an identical but non-maleic anhydride grafted butyl polymer to the same substrate surface. Generally, higher maleic anhydride content leads to increased adhesion. Preferably, the improvement in adhesive strength is at least 25%, more preferably at least 50%, yet more preferably at least 100%, even more preferably at least 150%, still more preferably at least 200%, depending on the substrate used for testing purposes. The polymer may exhibit a greater improvement in adhesion to some substrate surfaces than to others. Specifically, the maleic anhydride grafted polymer in the composite article has an adhesion to stainless steel of at least 15 psi, an adhesion to glass of at least 10 psi, an adhesion to mylar of at least 5 psi, or an adhesion to Teflon of at least 3 psi. A greater content of maleic anhydride in the polymer may lead to a greater improvement in adhesion. Preferrably, the maleic anhydride grafted polymer in the composite article has an adhesion to stainless steel of at least 20 psi, an adhesion to glass of at least 15 psi, an adhesion to mylar of at least 7 psi, or an adhesion to Teflon of at least 5 psi. More preferably, the maleic anhydride grafted polymer in the composite article has an adhesion to stainless steel of at least 25 psi, an adhesion to glass of at least 20 psi, an adhesion to mylar of at least 10 psi, or an adhesion to Teflon of at least 6 psi. The above values are with reference to the Tel-Tak test procedure outlined in the Examples hereinafter.

Processes for the formation of maleic anhydride grafted butyl polymers are known in the art. A particular process for producing a high maleic anhydride content butyl rubber is disclosed in commonly owned United States patent application PCT/CA2006/001115, which is incorporated herein by reference. However, this process and other grafting processes result in gel formation, which can impede compounding with inorganic fillers. In the present invention, a solution process may be used to achieve a high level of maleic anhydride grafting with low gel content.

In the solution process, a brominated butyl rubber is used as a starting material for grafting. The brominated butyl rubber is provided dissolved in a non-polar hydrocarbon solvent, preferably a non-halogenated non-polar hydrocarbon solvent. Examples of suitable solvents include hexane, toluene, xylene and isopentane. Brominated butyl rubber is conventionally produced by dissolving butyl rubber in a hexane solvent and adding an elemental halide to the solution. The brominated butyl rubber used in the present invention may be provided either in the same hexane solution used during bromination or may be produced separately and re-dissolved in hexane or another non-polar hydrocarbon solvent. The brominated butyl rubber preferably contains at least 1.0 mol% bromine, more preferably from 1.0 to 3.0 mol% bromine.

To the brominated butyl rubber solution is added at least 1 phr of maleic anhydride, an anti-oxidant and a catalyst of the formula 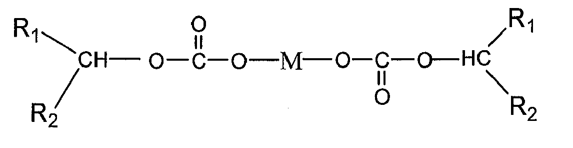 wherein,
M is a divalent metal,
R₁ is a C₂ to C₂₀ alkyl hydrocarbon,
R₂ is a C₂ to C₂₀ alkyl hydrocarbon.

The divalent metal may be, for example, copper (Cu), nickel (Ni) or cobalt (Co). Preferably, R₁ and R₂ are C₆ to C₈ alkyl hydrocarbons, more preferably alkane hydrocarbons. R₁ and R₂ may be the same or may be different. In a preferred embodiment, the catalyst comprises copper(II) 2-ethylhexanoate or copper(II) 2-ethyloctanoate.

The amount of maleic anhydride added may be in the range of from 1 to 20 phr, preferably from 2 to 15 phr, more preferably from 5 to 15 phr, yet more preferably from 5 to 10 phr. The anti-oxidant may comprise a phenolic anti-oxidant, for example 2,6-bis(1,1-dimethylethyl)-4-methylphenol (BHT). The anti-oxidant may be added in an amount of from 0.5 to 5 phr, preferably from 1 to 3 phr. The anti-oxidant may be added in the presence of a coagulating agent, such as acetone. The use of acetone as a coagulating agent advantageously avoids opening of the maleic anhydride ring structure, which can cause carboxylic acid cross-linking that impedes flowability of the polymer and prevents exfoliation of the nanoclay.

The solution is then reacted in a suitable vessel at a temperature of less than or equal to 120 °C and a pressure of at least 100 psi to form the maleic anhydride grafted butyl rubber. The temperature is preferably kept as low as possible to avoid gel formation during the grafting process. The temperature is preferably less than or equal to 110 °C, more preferably less than or equal to 100 °C, yet more preferably less than or equal to 90 °C, even more preferably less than or equal to 80 °C. Elevated pressures are used to increase the rate of reaction in order to achieve yields of at least 20%, preferably at least 35%, more preferably at least 50%. The pressure is preferably in the range of from 200 to 800 psi, more preferably from 300 to 700 psi, yet more preferably from 400 to 600 psi, even more preferably from 450 to 550 psi.

The maleic anhydride polymer produced according to the above process preferably has a molecular weight (Mw) of from 180 to 500, more preferably from 200 to 400, yet more preferably from 225 to 300 and a gel content of less than 1%, preferably less than 0.5%. Since there is little or no shear-induced molecular weight breakdown of maleic anhydride grafted butyl polymers produced according to the solution process, the molecular weight and viscosity of these polymers is typically much greater than for conventionally produced grafted polymers having the same maleic anhydride content. This makes these polymers particularly well suited for caulking applications, where the material should be flowable without being overly runny.

Although any maleic anhydride grafted butyl may be used, due to the low content of carboxylic acid cross-linking the maleic anhydride grafted butyl polymer produced according to the above process is particular well suited to the formation of exfoliated nanoclay-containing polymer compounds. The nanoclays used in the polymer compound are preferably functionalized siliceous nanoclays, more preferably montmorillonite nanoclays. Examples of suitable montmorillonite clays include Cloisite 10A, Cloisite 15A, or mixtures thereof. The montmorillonite nanoclay may be added after the maleic anhydride grafted butyl rubber is produced on a mill in a compounding operation, as is conventionally known. Alternatively, when the maleic anhydride grafted butyl rubber is produced in solution according to the above process, the nanoclay may be added to the solution either after reaction takes place or beforehand. Since good dispersion may be obtained when the nanoclay is added to the solution, the latter method is preferred. Without wishing to be bound by theory, it is believed that this method leads to improved exfoliation of the nanoclay, which leads to further improvement in adhesive properties.

An upper limit may exist for the amount of nanoclay that may be added to the polymer compound before adhesive strength values begin to decrease. The mechanism by which nanoclay improves adhesive strength is speculated to be based upon polymer-filler interactions that occur when the amount of polymer is in excess compared to the amount of nanoclay. Upon increasing the nanoclay content, filler-filler interactions may begin to occur at some upper threshold value that could then result in reduced adhesive strength for the polymer compound. Not wishing to be limited by the foregoing theory, it is speculated that an upper limit to the quantity of nanoclay that can be added may exist at about 15 phr. Accordingly, the preferred nanoclay content is from 5 to 15 phr, more preferably from 5 to 12 phr, yet more preferably from 5 to 10 phr, still more preferably from 5 to 7 phr. Preferably, the nanoclay in the polymer compound is exfoliated to obtain the best adhesive properties.

When at least 5 phr of a montmorillonite nanoclay is added to the maleic anhydride grafted butyl polymer, a further improvement in adhesive strength is achieved. The polymer compound made from a nanoclay containing maleic anhydride grafted butyl rubber may exhibit an adhesion at least 10% greater than the adhesion of an identical non-nanoclay containing butyl rubber to the same substrate surface, preferably at least 15% greater, more preferably at least 25% greater, yet more preferably at least 50% greater, even more preferably at least 100% greater, still more preferably at least 150% greater, most preferably at least 200% greater, depending upon the substrate surface being chosen for comparison. Specifically, the polymer compound made from nanoclay containing maleic anhydride grafted butyl rubber may exhibit an adhesion to stainless steel of at least 35 psi, an adhesion to glass of at least 31 psi, an adhesion to mylar of at least 10 psi, or an adhesion to Teflon™ of at least 7 psi. Preferably, the polymer compound made from nanoclay containing maleic anhydride grafted butyl rubber exhibits an adhesion to stainless steel of at least 40 psi, an adhesion to glass of at least 35 psi, an adhesion to mylar of at least 15 psi, or an adhesion to Teflon™ of at least 10 psi. More preferably, the adhesion to mylar is at least 20 psi, yet more preferably at least 25 psi and/or the adhesion to stainless steel is at least 45 psi, yet more preferably at least 50 psi. The above values are with reference to the Tel-Tak test procedure outlined in the Examples hereinafter.

Since nanoclays often have hydroxyl groups on their surface, rendering them hydrophilic and oleophobic, it is difficult to achieve good interaction between the nanoclay filler particles and the butyl elastomer. If desired, the interaction between the filler particles and the polymer can be enhanced by the introduction of silica modifiers. Non-limiting examples of such modifiers include bis-[-(triethoxysilyl)-propyl]-tetrasulfide, bis-[-(triethoxysilyl)-proply]-disulfide, N,N,-dimethylethanolamine, ethanolamine, triethoxysilyl-propyl-thiol and triethoxyvinylsilane.

In a composite article, when measuring the improvement in adhesion between a substrate and a maleic anhydride grafted butyl rubber, the butyl rubber used as a reference standard should be nearly identical to the maleic anhydride grafted butyl rubber, except for the lack of maleic anhydride content. For example, the residual unsaturation of the butyl rubber should be nearly identical to the unsaturation of the butyl rubber being used as an adhesion reference material. The test methods used to test the maleic anhydride grafted polymer and the reference material should also be identical. Only trace differences between the grafted polymer and the reference material are permissible. In this manner, the improvement in adhesion can be solely attributed to the presence of maleic anhydride functionality in the grafted polymer and not to some other properties of the grafted polymer or of the reference material. Similar considerations apply in comparing nanoclay containing maleic anhydride grafted polymers to non-nanoclay containing maleic anhydride grafted reference polymers. The improvement in adhesion of the polymer compound should be attributable to the presence of nanoclay in the compound, with all other parameters being kept roughly constant.

The compounding and vulcanization of polymers and polymer compounds according to the present invention may be carried out by methods known to those skilled in the art, for example the process disclosed in Encyclopedia of Polymer Science and Engineering, Vol. 4, S. 66 et seq. (Compounding) and Vol. 17, S. 666 et seq. (Vulcanization). The polymer or polymer compound may contain further auxiliary products for rubbers, such as reaction accelerators, vulcanizing accelerators, vulcanizing acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes, extenders, organic acids, inhibitors, metal oxides, and activators such as triethanolamine, polyethylene glycol, hexanetriol, etc., which are known to the rubber industry. The rubber aids are used in conventional amounts that depend, *inter alia,* on the intended use.

The invention is well suited for the manufacture of composite articles containing both an elastomer and a substrate material. These articles are particularly useful in a variety of applications, especially applications requiring the vibration dampening characteristics or gas impermeability characteristics of butyl rubber. A particular example of a composite article is a double-pane gas filled window, where the polymer/polymer compound is used as a caulking compound for sealing the window.

The invention is further illustrated with reference to the following examples.

### Examples

### Equipment

¹H NMR spectra were recorded with a Bruker DRX500 spectrometer (500.13 MHz ¹H) in CDCl₃ with chemical shifts referenced to tetramethylsilane. A Monsanto Tel-Tak Model TT-1 was used to determine the adhesion of uncured rubber samples to a variety of substrate surfaces, including such materials as stainless steel, glass, mylar, and Teflon™.

### Methods

The adhesion test procedure was based upon ASTM D-429 Method A. This test determines the force required to achieve planar separation of an elastomer from a solid substrate. The compound being tested was initially sheeted from a two-roll mill and cut into 5" x 3" sample sheets of varying thickness (0.020" to 0.130"). The sample sheets were then pressed into a 5" x 3" mold containing square woven fabric using a 15 pound weight for 5 minutes at 100 °C. The mold was backed by mylar on one side and aluminum on the other in order to preserve the integrity of the sample surfaces. The thickness of the molded specimens ranged from 1/16" to ½". The stainless steel and glass surfaces were cleaned and then preserved in glass jars containing ethanol, while the Teflon™ and mylar were wiped down with ethanol directly prior to testing. All surfaces were cut into test strips measuring ¼" x 2" x 1/16". Tests were performed within 16 hours of specimen preparation. Care was taken to prepare and preserve the integrity of all specimen surfaces.

When performing the adhesion tests, the rubber specimen was placed face up into the bottom of the sample holder of the Tel-Tak apparatus and the protective mylar layer was removed. The chosen substrate surface was polished with ethanol and placed into the top sample holder above the specimen. Both sample holders were then placed into the apparatus. The surfaces were moved into contact with one another and a built-in timer set to 60 s was automatically activated. A contact pressure of 32 psi was applied using the apparatus. Following the 60 s contact time, the specimen and substrate surfaces were separated from one another at a speed of 1 inch per minute, while constantly maintaining a parallel relationship between the surfaces. The force required to separate the specimen from the surface was measured using a calibrated force gauge with a capacity of 80 ounces and a built-in indicator for the maximum value. For ¼" samples, the maximum force value could be read directly from the force gauge in pounds per square inch (psi). Tests were carried out in triplicate and the mean values were reported.

### Materials

All reagents, unless otherwise specified, were used as received from Sigma-Aldrich (Oakville, Ontario). BIIR (BB2030, BBX2 and BB2040) was used as supplied by LANXESS Inc.

### Example 1, Preparation of maleic anhydride grafted butyl polymers

### Reagents and Solvents

1. BBX2 400 Grams Toluene HPLC grade: 4 L
2. Copper(11)2-ethylhexanoate: 0.45 grams
3. Maleic anhydride: 22.5 grams
4. BHT: 10 grams

### Experimentation

1. Make 10 % (wt by volume) solution of BBX2 in toluene (400 g in 4 L).
2. Add other reagents including BHT and shake for 30 min. before adding to the reactor.
3. Purge a suitable vessel (eg: Parr reactor) with nitrogen to remove oxygen.
4. Maintain agitation at 350 rpm, raise temperature to 100 °C then pressurize to 500 psi.
5. Continue the reaction for 4 hours.
6. Coagulate the sample in acetone. Add 0.25 phr BHT to sample and work it in.
7. Dry on the mill.

### Tests:

IR and Wet Chem titration for -COOH group or Maleic anhydride group, H¹ NMR, C₁₃ NMR, GPC.

### Example 2, Preparation of maleic anhydride grafted butyl polymers with nano clay filler

### Reagents and Solvents

1. BBX2 400 Grams
2. Toluene HPLC grade: 4 L
3. Copper(II)2-ethylhexanoate: 0.45 grams
4. Maleic anhydride: 22.5 grams
5. BHT: 10 grams
6. Cloisite 10A: 28g (7phr) dispersed in 300 ml dichloromethane

### Experimentation

1. Make 10 % (wt by volume) solution of BBX2 in toluene (400 g in 4 L).
2. Add other reagents including BHT and shake for 30 min. before added to the reactor .
3. Purge a suitable vessel (eg: the Parr reactor) with nitrogen to remove oxygen.
4. Maintain agitation at 350 rpm, raise temperature to 100 °C then pressurize to 500 psi.
5. Continue the reaction for 4 hours.
6. After 4 hours, Vent reactor. Place reactor under vacuum.
7. Add the Cloisite 10A (dispersed in the dichloromethane) to the reactor.
8. Stir reactor for 30 min to ensure the clay is worked in.
9. Coagulate the sample in acetone. Add 0.25 phr BHT to sample and work it in.
10. Dry on the mill.

### Tests:

IR and Wet Chem titration for-COOH group or Maleic anhydride group, H¹ NMR, C₁₃ NMR, GPC.

### Results and Discussion.

It has recently been shown that butyl based ionomers exhibit greatly improved adhesion to polar substrates such as steel and glass as well as to mylar (see co-pending commonly owned United States patent application 11/709,485, which is incorporated herein by reference. Example 4 of the co-pending application is identical to the High Isoprene Ionomer fisted in Table 1 of the present application). Example 1 illustrates the improvement in adhesion obtained in a composite article by modifying the butyl polymer with maleic anhydride. Surprisingly, Example 2 demonstrates that a significant further improvement is obtained by the addition of a small amount of nanoclay to the maleic anhydride grafted butyl rubber of Example 1. Both Examples 1 and 2 exhibited particularly good adhesion to Teflon, even compared with the high isoprene ionomer; since fluoropolymers are known in the art to be difficult to adhere to, this improvement in adhesion is particularly striking. For all substrates, the greatest adhesion was obtained with Example 2.

**Table 1. Adhesion as Determined through Tel-Tak Testing.**

| **Surface** | **Average Adhesion (psi)** | | | | **% Improvement of Example 2 relative to Example 1** |
|---|---|---|---|---|---|
| | **BB2030** | **High Isoprene Ionomer** | **Example 1** **Maleic Anhydride Grafted BBX2** | **Example 2** **Maleic Anhydride Grafted BBX2 + 7 phr Nano Clay Cloisite 10A** | |
| Stainless Steel | 11.3 | 38.3 | 33.3 | 51 | 53 |
| Glass | 6.0 | 33.0 | 30.8 | 35.3 | 15 |
| Mylar | 2.0 | 29.3 | 9.7 | 30 | 209 |
| Teflon | 1.5 | 3.8 | 6.5 | 10.7 | 65 |

Table 2 illustrates the improvement in adhesion obtained in Examples 1 and 2 as compared with typical Butyl polymers used in the adhesive industry. Examples 1 and 2 are superior for most of the substrates tested.

**Table 2. Adhesion as Determined through Tel-Tak Testing of Butyl Polymers used in the Adhesive Industry.**

| **Surface** | **Average Adhesion (psi)** | | |
|---|---|---|---|
| | **XL 10,000** | **Butyl 301** | **Butyl 402** |
| Stainless Steel | 1.5 | 21.8 | 24.7 |
| Glass | 0.5 | 17.2 | 13.3 |
| Mylar | 2.3 | 10.5 | 12 |
| Teflon | 0.5 | 2 | 1.7 |

Table 3 illustrates the effect of addition of a number of different nanoclays to conventional Butyl rubber RB301. In general, the addition of clay fillers to adhesive formulations is considered in the art to be detrimental to adhesion. As expected, the addition of nanoclay resulted in a decrease in adhesion values for all substrates tested, except for Teflon. However, in Examples 1 and 2, surprisingly high adhesive strength is achieved in maleic anhydride grafted butyl rubbers when a small amount of nanoclay is added to the compound formulation. It is postulated that this is due to the high level of polymer - filler interaction, which improves the cohesive strength of the material. It is also thought that at significantly higher nanoclay loadings the filler-filler interaction will become important and this will cause adhesive strength to decrease. The observation of improved adhesion of conventional Butyl RB301 to Teflon and glass when nanoclays Cloisite 10A and 15A, respectively, are added also runs contrary to expectation based on the teachings of the art and the results obtained in side-by-side testing with other substrates.

**Table 3. Adhesion as Determined through Tel-Tak Testing of Butyl RB301 with Cloisite nanoclays.**

| **Surface** | **Average Adhesion (psi)** | | | | | | |
|---|---|---|---|---|---|---|---|
| | RB-301 | RB301+ 5 PHR Cloisite 10A | RB301+ 10 PHR Cloisite 10A | RB301+ 15 PHR Cloisite 10A | RB301+ 5 PHR Cloisite 15 A | RB301+ 10 PHR Cloisite 15 A | RB-301+ 15 PHR Cloisite 15 A |
| Stainless Steel | 21.8 | 17 | 11.3 | 14 | 10.7 | 8.7 | 9.0 |
| Glass | 17.2 | 17 | 9.3 | 15.7 | 9.3 | 16 | 10 |
| Mylar | 10.5 | 8.3 | 7.7 | 6.7 | 8.3 | 6.7 | 8.3 |
| Teflon | 2 | 4 | 6.0 | 5.3 | 6.0 | 2.0 | 2.7 |

The use of nanoclays in a mechanical blend of BB2040-based ionomer (Example 3 of co-pending commonly owned United States patent application 11/709,485) is presented in Table 4. When comparing Example 2 (Maleic Anhydride Grafted BBX2 + 7 phr Nanoclay Closite 10A) to compounds containing ionomer and nanoclay, the same level of adhesion improvement is not evident. It is postulated that this is the result of a particular affinity for the maleic functionality to the clay surface over the ionomer functionality. This leads to a higher polymer-filler interaction in the maleic anhydride grafted butyl rubber and thereby an increased cohesive strength.

**Table 4. Adhesion as Determined through Tel-Tak Testing of Butyl lonomer with 5 phr Nano Clay.**

| **Rubber** | **Steel (psi)** | **Glass (psi)** | **Mylar (psi)** | **Teflon (psi)** |
|---|---|---|---|---|
| BB2030 | 11.3 | 6 | 2 | 1.5 |
| BB2040 lonomer (BB2040 + TPP) | 28.3 | 23.2 | 12.7 | 1 |
| BB2040 lonomer (BB2040 + TPP) + Cloisite 10A | 27.3 | 27.3 | 1.7 | 0.5 |
| BB2040 lonomer (BB2040 + TPP) + Cloisite 15A | 23.7 | 24 | 7.5 | 0.5 |
| BB2040 lonomer (BB2040 + TPP) + Na | 30.2 | 30.5 | 15.3 | 4 |

The adhesive polymers of Examples 1 and 2 can be advantageously employed, for example, in adhesive tapes, coatings, caulkings and tank lining formulations. The addition of nanoclay to conventional butyl rubber can also be advantageously employed in creating gas impermeable composite articles comprising fluropolymer substrates.

The foregoing describes preferred embodiments of the invention and other features and embodiments of the invention will be evident to persons skilled in the art. The following claims are to be construed broadly with reference to the foregoing and are intended by the inventor to include other variations and sub-combinations that are not explicitly claimed.

## Claims

1. An adhesive polymer comprising maleic anhydride grafted butyl rubber produced by:
a) providing a solution of a brominated butyl rubber in a non-polar hydrocarbon solvent;
b) adding to the solution at least 1 phr of maleic anhydride, an anti-oxidant and a catalyst of the formula, 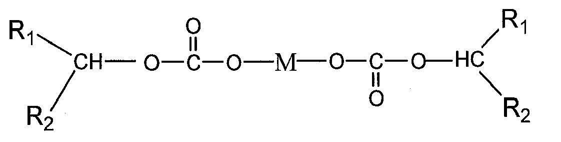 wherein,
M is a divalent metal,
R₁ is a C₂ to C₂₀ alkyl hydrocarbon,
R₂ is a C₂ to C₂₀ alkyl hydrocarbon; and,
c) reacting the solution at a pressure of at least 100 psi and a temperature of less than or equal to 120 °C to form the maleic anhydride grafted butyl rubber

2. The adhesive polymer according to claim 1, wherein from 5 to 15 phr of maleic anhydride is added to the solution.

3. The adhesive polymer according to claim 1 or 2, wherein the divalent metal is copper (Cu), nickel (Ni) or cobalt (Co).

4. The adhesive polymer according to any one of claims 1 to 3, wherein R₁ and R₂ are C₆ to C₈ alkyl hydrocarbons.

5. The adhesive polymer according to any one of claims 1 to 4, wherein the pressure is from 300 to 700 psi.

6. The adhesive polymer according to any one of claims 1 to 5, wherein the temperature is less than or equal to 100 °C.

7. The adhesive polymer according to any one of claims 1 to 6, wherein the adhesive polymer has an adhesive strength of at least 15 psi to stainless steel, an adhesive strength of at least 10 psi to glass, an adhesive strength of at least 5 psi to mylar or an adhesive strength of at least 3 psi to Teflon™.

8. An adhesive polymer compound comprising:
a) the adhesive polymer of any one of claims 1 to 7; and,
b) from 5 to 15 phr of a montmorillonite nanoclay.

9. The adhesive polymer compound according to claim 8, wherein the nanoclay comprises Cloisite 10A, Cloisite 15A, or a mixture thereof.

10. The adhesive polymer compound according to claims 8 or 9, wherein the compound is prepared by adding the nanoclay to the maleic anhydride grafted polymer while in the solution.

11. The adhesive polymer compound according to claims 8 or 9, wherein the compound is prepared by adding the nanoclay to the solution prior to step c).

12. A polymer compound comprising:
a) a butyl polymer comprising repeating units derived from an isobutene monomer and less than 2.5 mol% of repeating units derived from an isoprene monomer, the butyl polymer having at least 0.5 mol% of maleic anhydride units grafted thereto;
b) from 5 to 15 phr of a montmorillonite nanoclay; and,
c) the polymer compound having an adhesive strength when adhered to a substrate surface at least 10% greater than that of a butyl polymer according to part a) adhered to the same substrate surface.

13. The polymer compound according to claim 12, wherein the nanoclay is present in an amount of from 5 to 10 phr.

14. The polymer compound according to claim 12 or 13, wherein the nanoclay comprises Cloisite 10A, Cloisite 15A, or a mixture thereof.

15. The polymer compound according to any one of claims 12 to 14, wherein the substrate comprises stainless steel, glass, mylar or Teflon™ and wherein the polymer compound has an adhesive strength when compared with a butyl polymer according to part a) adhered to the same substrate surface at least 25% greater for stainless steel, at least 15% greater for glass, at least 50% greater for mylar, or at least 25% greater for Teflon™.

16. A composite article comprising:
a) a polymer compound comprising repeating units derived from a C₄ to C₁₆ isoolefin monomer, repeating units derived from a C₄ to C₁₄ multiolefin monomer and from 5 to 15 phr of a montmorillonite nanoclay; and,
b) a fluoropolymer substrate adhesively attached to the polymer compound.
